# EUROPÄISCHE PATENTSCHRIFT

(11) **EP 2 171 306 B1**
(45) Veröffentlichungstag und Bekanntmachung des Hinweises auf die Patenterteilung: **21.09.2011**
(21) Anmeldenummer: 08773800.1
(22) Anmeldetag: 02.07.2008
(51) Int. Cl.: F16D 65/28, F16D 55/224, F16C 3/04

(54) **BREMSZANGENEINRICHTUNG EINER SCHIENENFAHRZEUGBREMSE**
BRAKE CALIPER DEVICE FOR A RAILWAY BRAKE
DISPOSITIF D'ETRIER DE FREIN POUR UN FREIN D'UN VEHICULE FERROVIAIRE

(30) Priorität: 16.07.2007 DE 102007032966
(43) Veröffentlichungstag der Anmeldung: 07.04.2010
(73) Patentinhaber: KNORR-BREMSE Systeme für Schienenfahrzeuge GmbH, 80809 München (DE)
(72) Erfinder: FREIHERR VON WILMOWSKY, Kaspar, 87544 Blaibach-Ettensberg (DE); FUDERER, Erich, 82265 Fürstenfeldbruck (DE); STALTMEIR, Josef, 80807 München (DE); TÄSCHNER, Wolfgang, 81241 München (DE); OSTLER, Armin, 80469 München (DE)
(74) Vertreter: Mattusch, Gundula
(86) Internationale Anmeldenummer: PCT/EP2008/005376
(87) Internationale Veröffentlichungsnummer: WO 2009/010185

(56) Entgegenhaltungen:
- EP-A- 0 652 371
- EP-A- 0 732 247
- DE-A1- 4 422 315
- DE-C1- 4 431 353

## Beschreibung

### Stand der Technik

Die Erfindung geht aus von einer Bremszangeneinrichtung einer Schienenfahrzeugbremse gemäß dem Oberbegriff von Anspruch 1.

Eine gattungsgemäße Bremszangeneinrichtung ist aus der DE 44 31 353 C1 bekannt. Die bekannte Lagerungsanordnung ist in einer Bremszangeneinrichtung einer Schienenfahrzeugbremse vorgesehen, welche wenigstens zwei an voneinander weg weisenden Außenflächen des Gehäuses angeordnete, von je einem endseitigen Exzenterzapfen der Exzenterwelle exzentrisch getriebene Bremszangenhebel beinhaltet. Dabei sind die Zangenhebel der Bremszangeneinheit auf den Exzenterzapfen drehbar gelagert. Die Zangenhebel sind weiterhin axial mit den Exzenterzapfen der Exzenterwelle verbunden.

Bei der bekannten Lagerungsanordnung ist ein Ringflansch eines Zangenhebels auf einer mit der treibenden Welle mitdrehenden Deckelscheibe gleitend gelagert, welche wiederum mittels eines Axiallagers gegenüber dem Gehäuse axial gelagert ist. Bedingt durch die beiden Axiallagerungen entstehen jedoch relativ hohe Reibungsverluste. Denn das gehäuseseitige Axiallager befindet sich in Axialrichtung der Exzenterwelle gesehen im Bereich deren durch einen großen Durchmesser gekennzeichneten Grundkörpers der Exzenterwelle. Dadurch ist aber der wirksame Reibdurchmesser des durch Axialkräfte belasteten und deshalb ein Reibmoment erzeugenden Axiallagers relativ hoch, so dass in dem Axiallager ein unerwünscht hohes Reibmoment erzeugt wird, welches den Wirkungsgrad eines ein solches Exzentergetriebe beinhaltenden Antriebsstranges weiter herabsetzt.

Bei solchen Bremszangeneinrichtungen ergibt sich weiterhin das Problem, dass Schwingungen, welchen die Bremszangenhebel bei Fahrt des Schienenfahrzeugs im ungebremsten und daher unverspannten Zustand der Bremse ausgesetzt sind, zu störendem Luftschall führen.

In der EP 0 732 247 A2 wird ebenfalls eine Scheibenbremseinheit eines Schienenfahrzeugs in Form einer Bremszangeneinrichtung mit exzentrisch gelagerten Zangenhebeln beschrieben. Die Zangenhebel der Bremszange werden dabei über Gleitlagerscheiben an den Exzenterzapfen der Exzenterwelle axial abgestützt.

Der vorliegenden Erfindung liegt demgegenüber die Aufgabe zugrunde, eine Bremszangeneinrichtung einer Schienenfahrzeugbremse der eingangs erwähnten Art derart weiter zu entwickeln, dass sie weniger Reibungsverluste aufweist.

Diese Aufgabe wird erfindungsgemäß durch die Merkmale von Anspruch 1 gelöst.

### Offenbarung der Erfindung

Die Erfindung sieht vor, dass das Axiallager in Axialrichtung der Exzenterwelle gesehen im Bereich des Exzenterzapfens zwischen dem Bremszangenhebel und dem Gehäuse oder einem gehäusefesten Bauteil angeordnet ist und der axiale Kraftfluss von dem Bremszangenhebel direkt in das Axiallager und von dort in das Gehäuse oder das gehäusefeste Bauteil führt.

Weil das Axiallager dann einen geringeren Durchmesser als beim Stand der Technik aufweisen kann, ergibt sich ein geringerer wirksamer Hebelarm für das im Axiallager wirkende Reibmoment, weshalb letzteres geringer ausfällt als beim eingangs zitierten Stand der Technik. Dies resultiert in einem vorteilhaft hohen Wirkungsgrad der Lagerungsanordnung.

Durch die in den Unteransprüchen aufgeführten Maßnahmen sind vorteilhafte Weiterbildungen und Verbesserungen der im Patentanspruch 1 angegebenen Erfindung möglich.

Besonders bevorzugt ist das Axiallager unmittelbar oder direkt zwischen dem Körper und dem Gehäuse oder dem gehäusefesten Bauteil angeordnet. Dann führt der axiale Kraftfluss von dem Körper direkt in das Axiallager und von dort in das Gehäuse oder das gehäusefeste Bauteil. Deshalb ergibt sich ein kurzer, direkter Kraftfluss zwischen dem Körper und dem Gehäuse, ohne Zwischenschaltung der Exzenterwelle, was weniger nachgiebige Trennfugen und deshalb in einer vorteilhaft steifen Kraftübertragung resultiert. Bei einer Bremszangeneinheit führt dies zu definiert ausgebildeten Druck- und Bremspunkten der Bremse.

Genaueres geht aus der folgenden Beschreibung von Ausführungsbeispielen hervor.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: eine perspektivische Darstellung einer Bremszangeneinrichtung mit Dichtungsanordnungen gemäß einer bevorzugten Ausführungsform der Erfindung;
- Fig.2: eine vergrößerte Querschnittsdarstellung der Dichtungsanordnungen von Fig.1;
- Fig.3: eine Querschnittsdarstellung einer Dichtungsanordnung gemäß einer weiteren Ausführungsform;

### Beschreibung der Ausführungsbeispiele

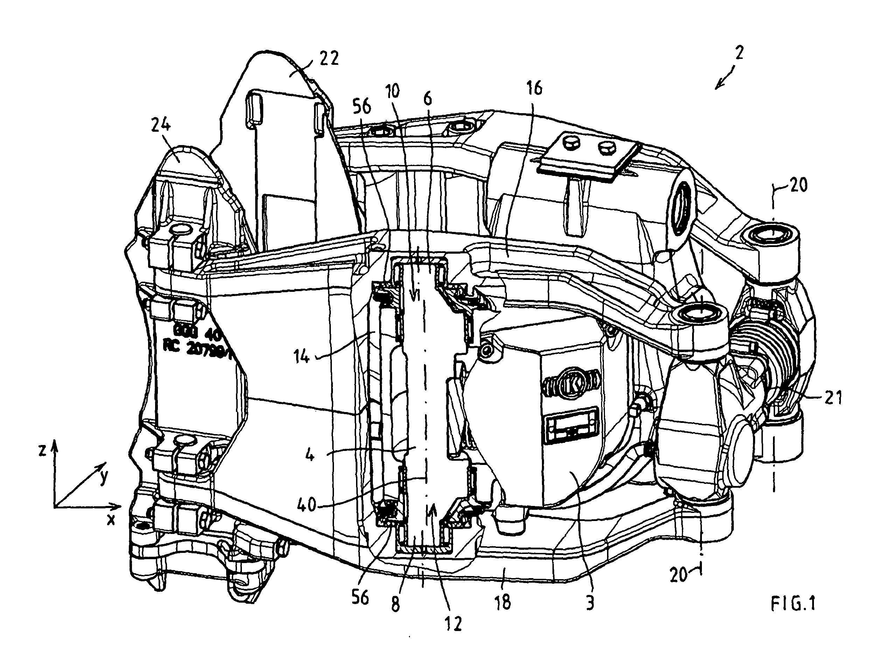

In Fig. 1 ist eine Bremszangeneinrichtung 2 einer Schienenfahrzeugbremse dargestellt, welche mit einer nicht gezeigten Bremsscheibe zusammenwirkt. Die Bremszangeneinrichtung 2 ist in Fig. 1 in Gebrauchslage gezeigt, d.h., dass oben dargestellte Bauelemente auch oben eingebaut sind.

Die Bremszangeneinrichtung 2 wird durch einen hier nicht näher beschriebenen Aktuator 3 betätigt und wirkt auf eine Exzenterwelle 4 mit endseitigen Exzenterzapfen, einem oberen Exzenterzapfen 6 und einem unteren Exzenterzapfen 8, welche aus Gehäusebohrungen 10, 12 eines Gehäuses 14 der Bremszangeneinrichtung 2 herausragend in je einem Bremszangenhebel, einem oberen Bremszangenhebel 16 und einem unteren Bremszangenhebel 18 rotatorisch gelagert sind. In der in Fig.1 gezeigten Gebrauchslage ist die Bremszangeneinrichtung 2 im wesentlichen horizontal angeordnet, so dass in Schwerkraftrichtung gesehen der obere Bremszangenhebel 16 auf einem höheren Niveau als der untere Bremszangenhebel 18 angeordnet ist.

Durch Drehung der Exzenterwelle 4 werden die Bremszangenhebel 16, 18 in Richtung auf die Bremsscheibe zu bewegt, wodurch an den Bremszangenhebeln 16, 18 angeordnete Bremsbelaghalter 22, 24 mit Bremsbelägen mit dieser in Reibkontakt treten. Die von den Bremsbelaghaltern 22, 24 weg weisenden Enden der Bremszangenhebel 16, 18 sind an den Enden eines Druckstangenstellers 21 um zur z-Achse parallele Schwenkachsen 20 drehgelagert, der zur Verschleißnachstellung in seiner Länge einstellbar ist. Bei einer Verlängerung des Druckstangenstellers 21 in y-Richtung entfernen sich die Enden der Bremszangenhebel 16, 18 voneinander, wodurch sich diese um die Exzenterzapfen 6, 8 der Exzenterwelle 4 verdrehen, um den Abstand der Belaghalter 22, 24 voneinander zu verkürzen.

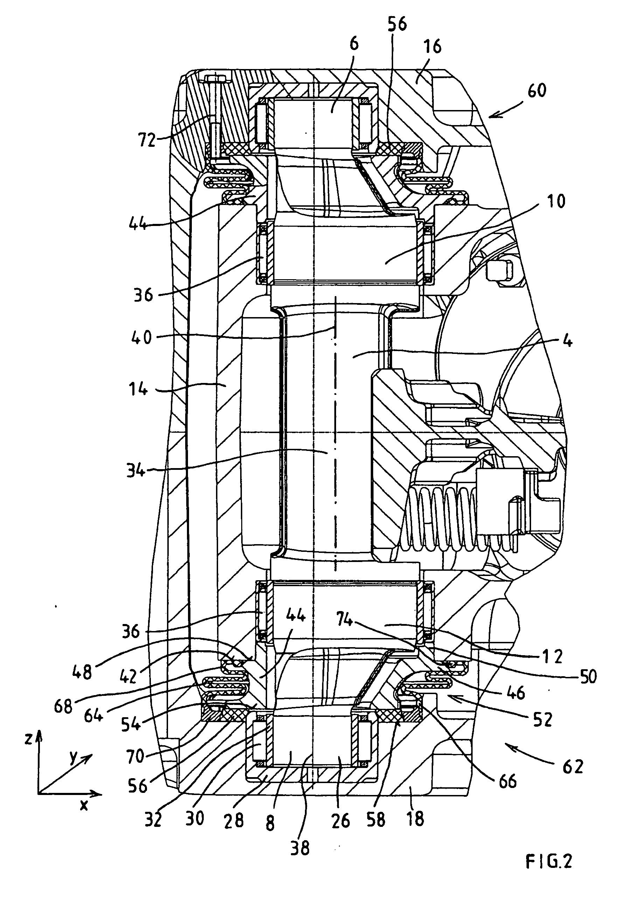

Wie im besten in Fig.2 zu sehen ist, weist der untere Bremszangenhebel 18, welcher hier stellvertretend für den oberen Bremszangenhebel 16 beschrieben wird, eine endseitige Sacklochbohrung 26 auf, in welche eine Hülse 28 eingesetzt ist, deren radial innere Umfangsfläche eine Lagerschale eines äußeren Radialnadellagers 30 bildet, mit welchem der Exzenterzapfen 8 gegenüber dem Bremszangenhebel 18 drehbar gelagert ist. Hierzu ist der Exzenterzapfen 8 von einer Hülse 32 umgeben, welche die andere Lagerschale des äußeren Radialnadellagers 30 bildet. Andererseits ist ein Mittelabschnitt 34 der Exzenterwelle 4 mittels zweier innerer Radialnadellager 36 gegenüber dem Gehäuse 14 drehgelagert. Diese Lagerungen kann der Fachmann den Erfordernissen entsprechend anpassen, sie können beispielsweise auch durch Gleitlagerungen gebildet werden.

Auch bei nicht betätigter Bremse führen die Zangenhebel 16, 18 Drehbewegungen relativ zu den Exzenterzapfen 6, 8 aus, weil bei Schienenfahrzeugen mit Scheibenbremsen beispielsweise im Rahmen des sog. Sinuslaufs Achsquerbewegungen stattfinden, welche die mit den Achsen gekoppelten Bremsscheiben ebenfalls Querbewegungen ausführen lassen. Wenn die Bremsscheibe an dem zugeordneten Bremsbelag zur Anlage kommt und dadurch den Bremszangenhebel 16, 18 auslenkt, führt Letzterer eine Drehbewegung um den in diesem Betriebszustand frei laufenden Exzenterzapfen 6, 8 aus.

Bei betätigter Bremse, d.h. bei rotatorischem Antrieb der Exzenterwelle 4 erfährt die Mittelachse 38 des Exzenterzapfens 8 sowohl eine translatorische Bewegung in Richtung der X-Achse und der Y-Achse als auch eine Rotation um die Mittelachse 40 der Exzenterwelle, welche parallel zur z-Achse oder zur Vertikalen ist. Dieser exzentrischen Bewegungsbahn kann der an der über das äußere Radialnadellager 30 gelagerte Bremszangenhebel 18 folgen, um eine Zuspann- oder Lösebewegung der Bremsbelaghalter 22, 24 gegenüber der Bremsscheibe hervorzurufen. Eine genaue Beschreibung eines solchen exzentrischen Antriebs ist in der DE 10 2005 049 058 A1 enthalten, weshalb hier nicht weiter darauf eingegangen werden soll.

Auf die Stirnfläche 42 der Gehäusebohrung 12 ist ein Flansch 44 mit einer an einer Flanschschulter 46 ausgebildeten Sitzfläche 48 aufgesetzt, der mit einem Zentrierkragen 50 in die Gehäusebohrung 12 hineinragt und dort vorzugsweise durch Presssitz gehalten wird. Der Flansch 44 bildet somit ein gehäusefestes Bauteil. Die radial äußere Umfangsfläche des Flansches 44 ist mit einer nach radial innen ragenden Ausnehmung 52 versehen. Weiterhin bildet eine vom Gehäuse 14 weg weisende Stirnfläche 54 des Flansches 44 eine Gleitlagerfläche für eine Axiallagerscheibe 56.

Die Axiallagerscheibe 56 besteht vorzugsweise aus einem schwingungsdämpfenden Gleitlagerwerkstoff mit niedrigem E-Modul, beispielsweise aus Polyamid oder Lagerbronze. Dadurch werden die Schwingungen, welchen die Bemszangenhebel 16, 18 im ungebremsten und daher unverspannten Zustand ausgesetzt sind, vorteilhaft gedämpft. Dies bewirkt wiederum auch eine Reduzierung des Geräuschpegels.

Die Axiallagerscheibe 56 ist bevorzugt an der zum Gehäuse 14 weisenden Stirnfläche 58 des Bremszangenhebels 18 befestigt, vorzugsweise durch eine in der Querschnittsdarstellung von Fig.2 nicht gezeigte Verschraubung. Die bremszangenhebelfeste Axiallagerscheibe 56 bildet zusammen mit der zugeordneten Gleitlagerfläche, welche hier durch die vom Gehäuse 14 weg weisende Stirnfläche 54 des gehäusefesten Flansches 44 gebildet wird, eine Axialgleitlagerung für den Bremszangenhebel 18 relativ zum Gehäuse 14.

Wie anhand von Fig.1 leicht vorstellbar ist, treten Axial- oder Querkräfte, d.h. in Bezug zur Mittelachse 40 der Exzenterwelle 4 oder in z-Richtung gerichtete Kräfte auf, wenn bei zugespannter Bremse die Bremsbeläge an die Bremsscheibe angelegt werden und dadurch Reibungskräfte entstehen, welche die am Druckstangensteller 21 endseitig gelagerten Bremszangenhebel 16, 18 senkrecht zu ihrer Längserstreckung in Form von Biegung belasten. Diese Biegebelastung ruft Quer- oder Axialkräfte hervor, die im vorliegenden Fall über die Axiallagerscheibe 56 am Gehäuse 14 abgestützt werden.

Wesentlich ist, dass der Kraftfluss der Quer- oder Axialkräfte in z-Richtung von den Bremszangenhebeln 16, 18 direkt in die zugeordneten Axiallagerscheiben 56 und von dort in die gehäusefesten Flansche 44 und schließlich in das Gehäuse 14 führt, ohne dass die Exzenterwelle 4 oder die Exzenterzapfen 6, 8 in diesen Kraftfluss einbezogen werden. Hingegen werden die auf die Bremszangenhebel 16, 18 wirkenden, aus ihrer Zuspannbewegung herrührenden und in der x-y-Ebene wirkenden Querkräfte über die äußeren Radialnadellager 30 an der Exzenterwelle 4 abgestützt, welche wiederum über die inneren Radialnadellager 36 am Gehäuse 14 abgestützt ist.

Da sich die Bremszangeneinrichtung 2 am Schienenfahrzeug in einem Schmutz- und Spritzwasser ausgesetzten Bereich befindet, muss die Exzenterwelle 4 bzw. deren endseitige Exzenterzapfen 6, 8 gegenüber dem Gehäuse 14 abgedichtet werden.

Fig.2 zeigt eine obere Dichtungsanordnung 60 und eine untere Dichtungsanordnung 62 der Bremszangeneinrichtung 2 im Detail. Stellvertretend für die obere Dichtungsanordnung 60 wird im folgenden der Aufbau der demgegenüber identischen unteren Dichtungsanordnung 62 beschrieben.

Die untere Dichtungsanordnung 62 umfasst wenigstens eine hermetische Dichtung, welche durch wenigstens einen einerseits am Gehäuse 14 und andererseits an dem unteren Bremszangenhebel 18 gehaltenen, wenigstens teilweise elastischen Faltenbalg 64 gebildet wird. Der Faltenbalg 64 ist dabei derart ausgeführt ist, dass er den aus dem exzentrischen Antrieb resultierenden Radialbewegungen des Exzenterzapfens 8 relativ zum Gehäuse 14 in einer zur Mittelachse 40 der Exzenterwelle 4 senkrechten Ebene x-y folgen kann, wobei die Falten des Faltenbalgs 64 diese Bewegungen ausgleichen.

Vorzugsweise ist der Faltenbalg 64 wenigstens teilweise aus Gummi gefertigt, bevorzugt vollständig aus einem NBR-Kautschuk (Acrylnitril-Butadien-Kautschuk), wobei die Enden 66, 68 des Faltenbalgs 64 form- und/oder reibschlüssig mit dem Gehäuse 14 und dem Bremszangenhebel 18 verbunden sind.

Der Faltenbalg 64 umschließt den Flansch 44 radial und hat in Richtung der Mittelachse 40 der Exzenterwelle 4 gesehen (z-Richtung) ungefähr dessen Längserstreckung. Wenigstens einige der Falten des Faltenbalgs 64 ragen in die radiale Ausnehmung 52 des Flansches 44 hinein, welcher mit dem Gehäuse 14 verbunden ist.

Besonders bevorzugt ist das dem Bremszangenhebel 18 zugeordnete Ende 66 des Faltenbalgs 64 mit einem demgegenüber steifen Ring 70 vorzugsweise stoffschlüssig verbunden, welcher an dem Bremszangenhebel 18 vorzugsweise formschlüssig gehalten ist. Dieser Stoffschluss wird beispielsweise dadurch herbeigeführt, dass der Ring 70 wenigstens teilweise in den Faltenbalg 64 einvulkanisiert wird. Dieser Ring 70 ist wie die Axiallagerscheibe 56 bevorzugt an der zum Gehäuse 14 weisenden Stimfläche 58 des Bremszangenhebels 18 durch wenigstens eine Schraube 72 befestigt. Weiterhin umschließt der Ring 70 die Axiallagerscheibe 56.

Andererseits wird das dem Gehäuse 14 zugeordnete Ende 68 des Faltenbalgs 64 zwischen der Sitzfläche 48 des Flansches 44 und der zum Bremszangenhebei 18 weisenden Stimfläche 42 des Gehäuses 14 durch Kraftschluss und/oder Formschluss geklemmt, wozu das Ende 68 eine Querschnittsvergrößerung 74 aufweisen kann, die in einer entsprechenden Ringausnehmung in der Sitzfläche 48 des Flansches 44 aufgenommen ist.

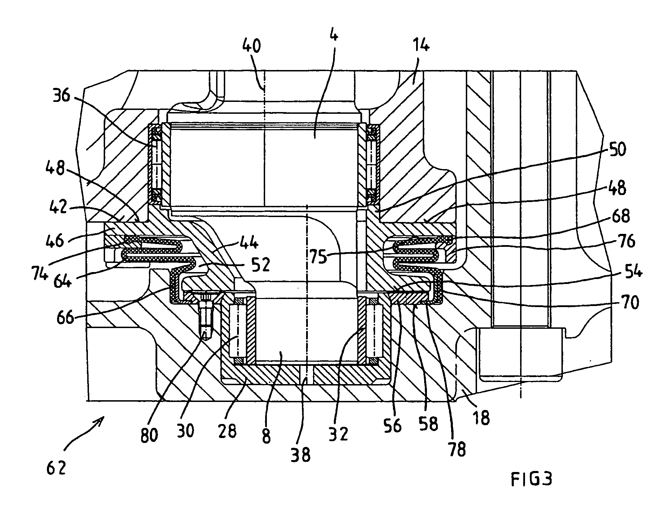

Bei dem weiteren Ausführungsbeispiel nach Fig.3 sind die gegenüber dem vorhergehenden Beispiel gleich bleibenden und gleich wirkenden Teile durch die gleichen Bezugszeichen gekennzeichnet. Im Unterscheid zu diesem ist das dem Flansch 44 oder dem Gehäuse 14 zugeordnete Ende 68 des Faltenbalgs 64 zwischen einer von der Sitzfläche 48 weg weisenden Stimfläche 75 des Flansches 44 und einem separaten Klemmring 76 vorzugsweise formschlüssig geklemmt, der beispielsweise mit dem Flansch 44 verschraubt ist. Weiterhin hat der mit dem anderen Ende 66 des Faltenbalgs 64 vulkanisierte Ring 70 mit L-förmigem Querschnitt einen Schenkel 78, welcher durch die an die Stimfläche 58 des Bremszangenhebels 18 durch Schrauben 80 geschraubte Axiallagerscheibe 56 übergriffen und dadurch festgeklemmt ist. Ansonsten sind die Dichtungsanordnungen 60, 62 sowie die Lagerung der Exzenterwelle 4 und der Bremszangenhebei 16, 18 identisch wie beim Ausführungsbeispiel gemäß Fig.2 ausgeführt.

### Bezugszeichenliste

- 2: Bremszangeneinrichtung
- 4: Exzenterwelle
- 6: Exzenterzapfen
- 8: Exzenterzapfen
- 10: Gehäusebohrung
- 12: Gehäusebohrung
- 14: Gehäuse
- 16: Bremszangenhebel
- 18: Bremszangenhebel
- 20: Schwenkachse
- 21: Druckstangensteller
- 22: Bremsbelaghalter
- 24: Bremsbelaghalter
- 26: Sacklochbohrung
- 28: Hülse
- 30: Radialnadellager
- 32: Hülse
- 34: Mittelabschnitt
- 36: Radialnadellager
- 38: Mittelachse
- 40: Mittelachse
- 42: Stimfläche
- 44: Flansch
- 46: Flanschschulter
- 48: Sitzfläche
- 50: Zentrierkragen
- 52: Ausnehmung
- 54: Stirnfläche
- 56: Axiallagerscheibe
- 58: Stimfläche
- 60: obere Dichtungsanordnung
- 62: untere Dichtungsanordnung
- 64: Faltenbalg
- 66: Ende
- 68: Ende
- 70: Ring
- 72: Schraube
- 74: Querschnittsvergrößerung
- 75: Stimfläche
- 76: Klemmring
- 78: Schenkel
- 80: Schraube

## Patentansprüche

1. Bremszangeneinrichtung (2) einer Schienenfahrzeugbremse, welche wenigstens zwei an voneinander weg weisenden Außenflächen eines eine Exzenterwelle (4) lagernden Gehäuses (14) angeordnete, von je einem endseitigen Exzenterzapfen (6, 8) der Exzenterwelle exzentrisch getriebene Bremszangenhebel (16, 18) beinhaltet, sowie eine Lagerungsanordnung zwischen dem Gehäuse (14) und wenigstens einem Bremszangenhebel (16, 18), in welchem ein aus dem Gehäuse (14) ragender endseitiger Exzenterzapfen (6, 8) der Exzenterwelle (4) drehbar gelagert ist, welcher sich durch Drehung der Exzenterwelle (4) relativ zum Gehäuse (14) exzentrisch bewegt und **dadurch** den Bremszangenhebel (16, 18) treibt, beinhaltend wenigstens ein Axiallager (56) zur Übertragung von Axialkräften von dem Bremszangenhebel (16, 18) auf das Gehäuse (14), **dadurch gekennzeichnet, dass** das Axiallager (56) in Axialrichtung der Exzenterwelle (4) gesehen im Bereich des Exzenterzapfens (6, 8) zwischen dem Bremszangenhebel (16, 18) und dem Gehäuse (14) oder einem gehäusefesten Bauteil (44) und unmittelbar oder direkt zwischen dem Bremszangenhebel (16, 18) und dem Gehäuse (14) oder dem gehäusefesten Bauteil (44) angeordnet ist, wobei der axiale Kraftfluss von dem Bremszangenhebel (16, 18) direkt in das Axiallager (56) und von dort in das Gehäuse (14) oder das gehäusefeste Bauteil (44) führt.

2. Bremszangeneinrichtung nach Anspruch 1, **dadurch gekennzeichnet, dass** das Axiallager ein Gleitlager ist und eine Gleitlagerscheibe (56) beinhaltet.

3. Bremszangeneinrichtung nach Anspruch 2, **dadurch gekennzeichnet, dass** die Gleitlagerscheibe (56) mit dem Körper (18) wenigstens drehfest verbunden ist.

4. Bremszangeneinrichtung nach Anspruch 2 oder 3, **dadurch gekennzeichnet, dass** die Gleitlagerscheibe (56) aus einem schwingungsdämpfenden Gleitlagerwerkstoff gefertigt ist.

5. Bremszangeneinrichtung nach wenigstens einem der Ansprüche 2 bis 4, **dadurch gekennzeichnet, dass** zwischen der Gleitlagerscheibe (56) und dem Gehäuse (14) oder dem gehäusefesten Körper (44) eine aus einer Rotation und einer Translation zusammengesetzte Bewegung stattfindet.

## Claims

1. Brake calliper device (2) of a rail vehicle brake, which comprises at least two brake calliper levers (16, 18) which are located on opposite outer surfaces of a housing (14) supporting an eccentric shaft (4) and which are eccentrically driven by eccentric pins (6, 8) at the ends of the eccentric shaft, as well as a mounting arrangement between the housing (14) and at least one brake calliper lever (16, 18), in which is rotatably supported an eccentric pin (6, 8) at the end of the eccentric shaft (4), which eccentric pin is moved eccentrically by the rotation of the eccentric shaft (4) relative to the housing (14) and thereby drives the brake calliper lever (16, 18), comprising at least one thrust bearing (56) for transmitting axial forces from the brake calliper lever (16, 18) to the housing (14), **characterised in that** the thrust bearing (56) is, if viewed in the axial direction of the eccentric shaft (4), located in the region of the eccentric pin (6, 8) between the brake calliper lever (16, 18) and the housing (14) or a component (44) mounted on the housing and is located immediately or directly between the brake calliper lever (16, 18) and the housing (14) or the component (44) mounted on the housing, wherein the axial power flow runs from the brake calliper lever (16, 18) directly into the thrust bearing (56) and from there into the housing (14) or the component (44) mounted on the housing.

2. Brake calliper device according to claim 1, **characterised in that** the thrust bearing is a plain bearing and comprises a plain bearing washer (56).

3. Brake calliper device according to claim 2, **characterised in that** the plain bearing washer (56) is at least non-rotatably connected to the body (18).

4. Brake calliper device according to claim 3 or 3, **characterised in that** the plain bearing washer (56) is made of a vibration-damping plain bearing material.

5. Brake calliper device according to one or more of claims 2 to 4, **characterised in that** a motion combining a rotation and a translation occurs between the plain bearing washer (56) and the housing (14) or the component (44) mounted on the housing.

## Revendications

1. Dispositif (2) d'étrier de frein d'un frein de véhicule ferroviaire, qui comporte au moins deux leviers (16, 18) d'étrier de frein, placés sur des surfaces extérieures, s'éloignant l'une de l'autre, d'une enveloppe (14) de montage d'un arbre à excentrique et entraînés de manière excentrée par respectivement un tourillon (6, 8) à excentrique du côté du bout de l'arbre (4) à excentrique, ainsi qu'un agencement de palier entre l'enveloppe (14) et au moins un levier (16, 18) d'étrier de frein, dans lequel un tourillon (6, 8) d'excentrique du côté du bout de l'arbre (4) à excentrique et sortant de l'enveloppe (14) est monté tournant, tourillon qui se déplace de manière excentrée par rapport à l'enveloppe (14) par la rotation de l'arbre (4) à excentrique et entraîne ainsi le levier (16, 18) d'étrier de frein, comportant au moins un palier (56) axial pour la transmission de forces axiales du levier (16, 18) d'étrier de frein à l'enveloppe (14), **caractérisé en ce que** le palier (56) axial est placé, considéré dans la direction axiale de l'arbre (4) à excentrique, dans la zone du tourillon (6, 8) d'excentrique entre le levier (16, 18) d'étrier de frein et l'enveloppe (14) ou entre un élément (44) fixé à l'enveloppe et sans intermédiaire ou directement entre le levier (16, 18) d'étrier de frein et l'enveloppe (14) ou l'élément (14) fixé à l'enveloppe, le flux de force axial allant du levier (16, 18) d'étrier de frein directement dans le palier (56) axial et de là dans l'enveloppe (14) ou dans l'élément (44) fixé à l'enveloppe.

2. Dispositif d'étrier de frein suivant la revendication 1, **caractérisé en ce que** le palier axial est un palier lisse et comporte un disque (56) de palier lisse.

3. Dispositif d'étrier de frein suivant la revendication 2, **caractérisé en ce que** le disque (56) de palier lisse est solidaire au moins en rotation de la pièce (18).

4. Dispositif d'étrier de frein suivant la revendication 2 ou 3, **caractérisé en ce que** le disque (56) de palier lisse est en un matériau pour palier lisse amortissant les vibrations.

5. Dispositif d'étrier de frein suivant au moins l'une des revendications 2 à 4, **caractérisé en ce qu'**un mouvement composé d'une rotation et d'une translation a lieu entre le disque (56) de palier lisse et l'enveloppe (14) ou la pièce (44) fixée à l'enveloppe.
